(19) Europäisches Patentamt
European Patent Office
Office européen des brevets

(11) **EP 1 633 098 B1**

(12) **EUROPEAN PATENT SPECIFICATION**

(45) Date of publication and mention
of the grant of the patent:
**04.08.2010 Bulletin 2010/31**

(51) Int Cl.:
*H04L 27/26* (2006.01)

(21) Application number: **05291741.6**

(22) Date of filing: **17.08.2005**

(54) **Carrier Synchronization in OFDM**

Trägersynchronisation in OFDM

Synchronisation de porteuse en OFDM

(84) Designated Contracting States:
**AT BE BG CH CY CZ DE DK EE ES FI FR GB GR HU IE IS IT LI LT LU LV MC NL PL PT RO SE SI SK TR**

(30) Priority: **18.08.2004 KR 2004065130**

(43) Date of publication of application:
**08.03.2006 Bulletin 2006/10**

(73) Proprietor: **LG Electronics, Inc.
Seoul 150-875 (KR)**

(72) Inventors:
• **Lee, Dong Geun
Gangnam-gu
Seoul (KR)**
• **Lee, Tae Won
Gwangmyeong-si
Gyeonggi-do (KR)**

(74) Representative: **Loisel, Bertrand
Cabinet Plasseraud
52 rue de la Victoire
75440 Paris Cedex 09 (FR)**

(56) References cited:
• **PRIOTTI P: "Frequency synchronization of MIMO OFDM systems with frequency-selective weighting" VEHICULAR TECHNOLOGY CONFERENCE, 2004. VTC 2004-SPRING. 2004 IEEE 59TH MILAN, ITALY 17-19 MAY 2004, PISCATAWAY, NJ, USA,IEEE, US, vol. 2, 17 May 2004 (2004-05-17), pages 1114-1118, XP010766085 ISBN: 0-7803-8255-2**
• **HONG CHEN ET AL: "A Comparison of Frequency Offset Tracking Algorithms for OFDM" GLOBECOM'03. 2003 - IEEE GLOBAL TELECOMMUNICATIONS CONFERENCE. CONFERENCE PROCEEDINGS. SAN FRANCISCO, DEC. 1 - 5, 2003, IEEE GLOBAL TELECOMMUNICATIONS CONFERENCE, NEW YORK, NY : IEEE, US, vol. VOL. 7 OF 7, 1 December 2003 (2003-12-01), pages 1069-1073, XP010678485 ISBN: 0-7803-7974-8**

## Description

## BACKGROUND OF THE INTENTION

## Field of the Invention

The present invention relates to a digital receiver, and more particularly, to a method and apparatus for estimating an SFO (Sampling Frequency Offset) applicable to an OFDM (Orthogonal Frequency Division Multiplexing) digital receiver.

## Discussion of the Related Art

Generally, a DVB-T (Digital Video Broadcasting - Terrestrial) system and a DVB-H (DVB-Handheld) system, which act as the European transmission standard for terrestrial digital TV have generally selected an OFDM (Orthogonal Frequency Division Multiplexing) transmission scheme. It is well known in the art that the OFDM transmission scheme has very strong resistance to channel distortion caused by multiple paths (also called a multi-path) in a wireless broadband broadcast system.

On the other hand, the OFDM transmission scheme has very weak resistance to synchronization. Therefore, if accurate synchronization is not established between a transmitter and a receiver, distortion of a reception signal occurs. In order to solve the above-mentioned problem, many developers have conducted intensive research into an improved OFDM transmission scheme.

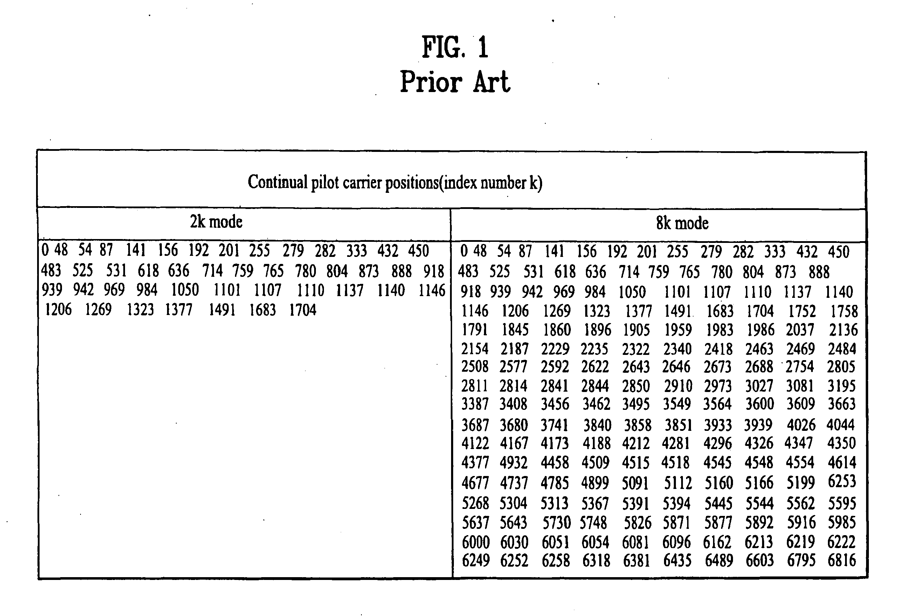

Particularly, if the receiver does not correctly perform sampling synchronization, an ISI (Inter Symbol Interference) and a constellation rotation may occur in a reception signal, such that the receiver cannot demodulate the reception signal. In order to solve the above-mentioned problem, there has been newly proposed a method for estimating an SFO (Sampling Frequency Offset) using a CP (Continual Pilot) shown in FIG. 1.

FIG. 1 shows general CP positions. As shown in FIG. 1, 45 pilots are employed during a 2k mode, and 177 pilots are employed during an 8k mode.

For example, in the case of the 2k mode, a total of 1705 data subcarriers are present in one OFDM symbol interval. A pilot is located at each of subcarrier positions, for example, 0-th, 48-th, and 54-th subcarrier positions, etc. In this case, the pilot is positioned at the same subcarrier positions as the above subcarrier positions in the next OFDM symbol, such that the pilot will be referred to as a Continual Pilot (CP).

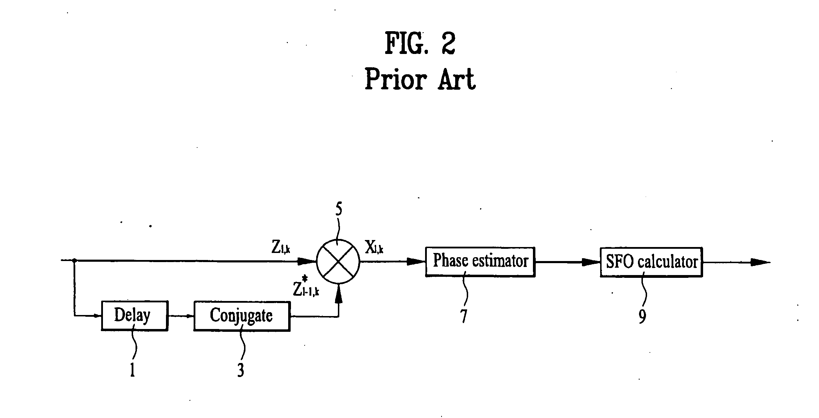

A method for calculating the SFO using the above-mentioned CP information shown in FIG. 1 is shown in FIG. 2.

FIG. 2 is a block diagram illustrating a conventional SFO estimation system.

The above-mentioned conventional SFO estimation method will hereinafter be described with reference to FIG. 2. Firstly, the SFO estimation system receives a single signal $Z_{l,k}$. The $Z_{l,k}$ signal is indicative of a k-th subcarrier in a first OFDM symbol. For example, in the case of the 2k mode shown in FIG. 1, the $Z_{l,k}$ signal is indicative of one pilot from among a plurality of pilots (i.e., 0-th, 48-th, and 53-rd symbols, etc.) in the first OFDM symbol.

The $Z_{l,k}$ signal is converted into another signal of $Z_{l-1,k}$ via a delay 10. The $Z_{l-1,k}$ signal is converted into a conjugate root signal of $Z_{l-1,k}^{*}$ via a conjugate calculator 3.

Correlation between the $Z_{l,k}$ signal and the $Z_{l-1,k}^{*}$ signal is performed by a multiplier 5, such that the multiplier 5 outputs a phase information signal of $x_{l,k}$. By the following equation 1 performed by a phase estimator 7, the phase information signal of $x_{l,k}$ acquires a total of 45 phase data units in the case of the 2k mode, and acquires a total of 177 phase data units in the case of the 8k mode.

[Equation 1]

$$\tan^{-1}\frac{\mathrm{Re}(x_{l,k})}{\mathrm{Im}(x_{l,k})}$$

An SFO calculator 9 calculates a slope between phase data units using the phase data generated from the phase estimator 7, and calculates a mean slope, such that it calculates the SFO value.

The above-mentioned conventional SFO estimation method acquires correlation between two OFDM symbols, acquires a phase on the basis of the acquired correlation, and calculates a change rate of the acquired phase, such that it estimates the SFO value.

However, the above-mentioned SFO estimation method may incur SFO estimation complexity due to irregular overshoots of the CP, and may have difficulty in acquiring sufficient phase information due to the above-mentioned limited number of continual CPs (i.e., 45 phase data units in the 2k mode, and 177 phase data units in the 8k mode).

Particularly, the conventional SFO estimation method has difficulty in estimating a correct SFO when irregular overshoots occur due to a deep fading phenomenon.

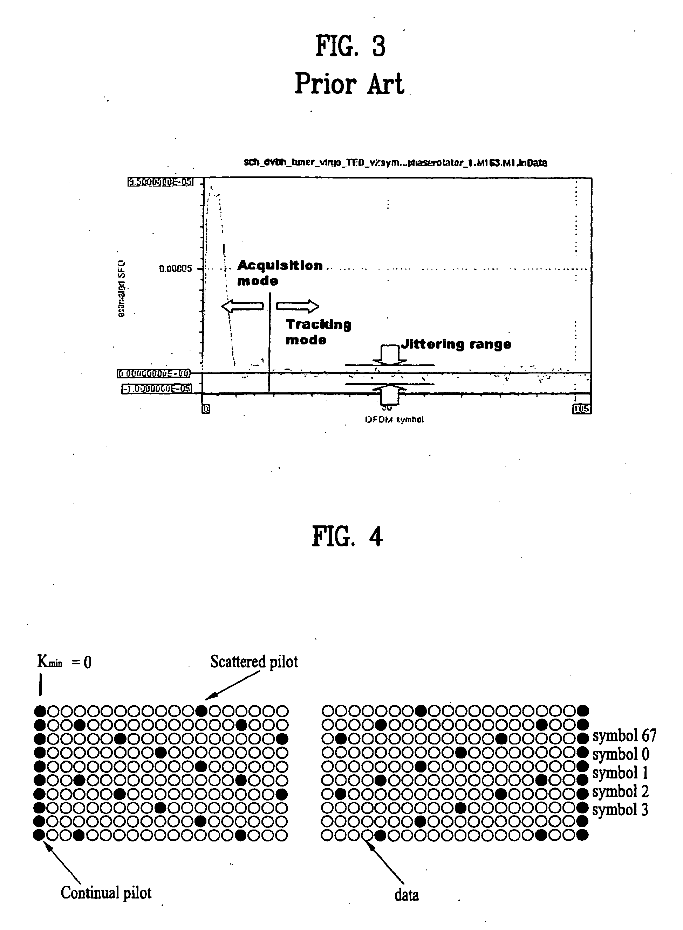

The above-mentioned irregular overshoots do not affect the SFO in an acquisition mode of a sampling frequency, but they greatly affect the SFO in a tracking mode of the sampling frequency as shown in FIG. 3.

FIG. 3 shows a plurality of SFO values estimated in acquisition and tracking modes of the sampling frequency. As shown in FIG. 3, it can be recognized that a jittering range increases if overshoots occur in the tracking mode.

In this manner, if the jittering range increases due to the overshoots in the tracking mode, the increased jittering range has a negative influence upon a method for compensating for a sampling frequency by estimating a correct SFO.

PRIOTTI P : "Frequency synchronization of MIMO OFDM systems with frequency-selective weighting" VEHICULAR TECHNOLOGY CONFERENCE, 2004. VTC 2004-SPRING. 2004 IEEE 59TH MILAN, ITALY 17-19 MAY 2004, PISCATAWAY, NJ, USA, IEEE, US, vol.2, 17 May 2004 discloses a method for determining a frequency offset based on an autocorrelation of a weighted representation of a received signal.

HONG CHEN ET AL : "A Comparison of Frequency Offset Tracking Algorithms for OFDM" GLOBECOM'03.2003 - IEEE GLOBAL TELECOMMUNICATIONS CONFERENCE. Conference PROCEEDINGS. SAN FRANCISCO, DEC.1 - 5, 2003, IEEE GLOBAL TELECOMMUNICATIONS CONFERENCE, NEW YORK, NY : IEEE, US, vol. VOL. 7 OF 7, 1 December 2003 discloses a method for determining a frequency offset by correlating received symbols with known symbols.

## SUMMARY OF THE INVENTION

Accordingly, the present invention is directed to a method and apparatus for estimating an SFO in a digital receiver that substantially obviates one or more problems due to limitations and disadvantages of the related art.

An object of the present invention is to provide a method for estimating an SFO using a scattered pilot instead of a CP.

Another object of the present invention is to provide an SFO estimation method for reducing a jittering range caused by overshoots in a frequency tracking mode.

A still another object of the present invention is to provide an apparatus for compensating for a sampling frequency using the estimated SFO.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a method for estimating an SFO (Sampling Frequency Offset) in a digital receiver to perform sampling synchronization, is defined in claim 1.

Preferably, the step b) for calculating the phase value includes the steps of: b1) correlating the current scattered pilot with the delay value acquired when the current scatter pilot is delayed by four symbol intervals; and b2) performing an arctangent operation on the resultant correlation value to acquire a desired phase.

Preferably, the step c) for estimating the SFO value includes the steps of: c1) receiving the estimated phase value, and determining the presence or absence of phase overshoots on the basis of the received phase value; c2) if the phase overshoots occur, compulsorily setting the estimated phase value to zero, and storing the resultant phase value; and c3) calculating the SFO value using the stored phase value.

Preferably, the step c1) for determining the presence or absence of the phase overshoots includes the steps of: comparing a magnitude of the estimated phase value with that of a predetermined standard deviation, and determining the presence or absence of the phase overshoots according to the comparison result.

Preferably, the step c1) for determining the presence or absence of the phase overshoots is performed when a current frequency estimation mode is a tracking mode.

Preferably, the step c3) for calculating the SFO value includes the steps of: c3-1) dividing the stored phase value into a left-half (LH) phase value and a right-half (RH) phase value on the basis of a center subcarrier, and accumulating each of the LH phase value and the RH phase value; and c3-2) calculating a difference between the accumulated LH and RH phase values, and calculating the SFO value.

In another aspect of the present invention, there is provided an apparatus for estimating a sampling frequency offset (SFO) in a digital receiver, as defined in claim 11.

In yet another aspect of the present invention, there is provided an apparatus for estimating a sampling frequency offset (SFO) in a digital receiver, comprising: a delay for receiving a scattered pilot contained in a single OFDM (Orthogonal Frequency Division Multiplexing) symbol interval, and delaying the received scattered pilot by four symbol intervals; a conjugate calculator for calculating a conjugate root value of.an output value of the delay; a multiplier for correlating an output value of the conjugate calculator with the received scattered pilot; a phase estimator for performing an arctangent operation on an output value of the multiplier to acquire a phase value; and an SFO calculator for receiving an output value of the phase estimator, storing the received output value of the phase estimator during a predetermined interval, and calculating an SFO value using the stored phase value.

Preferably, the SFO calculator determines whether the presence or absence of phase overshoots in a tracking mode of a sampling frequency, and performs a zero-forcing operation when the presence of the phase overshoots is determined.

Preferably, the presence or absence of the phase overshoots is determined by comparing the estimated phase value with a predetermined standard deviation.

In yet another aspect of the present invention, there is provided a digital receiver apparatus, comprising: a resampler for performing a sampling process on a received signal according to the calculated SFO value; a guard interval removal unit for removing a guard interval of the received signal from a time domain; a Fast Fourier Transform (FFT) unit for converting a time-domain signal into a frequency-domain signal; and an SFO compensator for calculating the SFO value using a scattered pilot contained in an OFDM (Orthogonal Frequency Domain Multiplexing) symbol so as to perform correct sampling synchronization on the frequency-domain signal.

Preferably, the SFO compensator includes: a pilot extractor for extracting a scattered pilot signal from the frequency-domain signal; a timing error detector for receiving the extracted scattered pilot signal, estimating a phase value using both the scattered pilot contained in a single symbol and a delay value acquired when the scattered pilot is delayed by four symbol intervals, and calculating the SFO value using the estimated phase value; a loop filter (L/F) for receiving the SFO value, and accumulatively compensating for the received SFO value ; and a numerical controlled oscillator (NCO) for controlling a sampling frequency upon receiving the compensated SFO value from the L/F unit.

Preferably, the digital receiver is a DVB-T (Digital Video Broadcasting - Terrestrial) system or a DVB-H (DVB-Handheld) system.

Therefore, the present invention correctly estimates the SFO value using the scattered pilot as compared to the conventional estimation method based on a CP, and reduces a jittering range caused by overshoots using a zero-forcing algorithm, such that it solves an SFO estimation failure caused by serious phase distortion.

It is to be understood that both the foregoing general description and the following detailed description of the present invention are exemplary and explanatory and are intended to provide further explanation of the invention as claimed.

## BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 shows general CP positions;

FIG. 2 is a block diagram illustrating a conventional SFO estimation system using a CP;

FIG. 3 shows a conventional plurality of SFO values estimated in acquisition and tracking modes of the sampling frequency;

FIG. 4 shows a pilot insertion pattern according to the present invention;

FIG. 5 is a conceptual diagram illustrating a correlation algorithm using a scattered pilot according to the present invention;

FIG. 6 is a block diagram illustrating an SFO estimation system using a scattered pilot according to the present invention;

FIG. 7 is a flow chart illustrating an SFO estimation algorithm according to the present invention;

FIG. 8a is a graph illustrating a phase variation in the case of using a scattered pilot according to the present invention;

FIG. 8b is a graph illustrating a conventional phase variation in the case of using a CP;

FIG. 9 shows estimated SFO values when phase overshoots are zero-forced in a tracking mode according to the present invention; and

FIG. 10 is a block diagram illustrating an OFDM receiver according to the present invention.

## DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

Prior to describing the present invention, it should be noted that most terms disclosed in the present invention correspond to general terms well known in the art, but some terms have been selected by the applicant as necessary and will hereinafter be disclosed in the following description of the present invention. Therefore, it is preferable that the terms defined by the applicant be understood on the basis of their meanings in the present invention.

FIG. 4 shows a pilot insertion pattern according to the present invention;

Pilot arrangement shown in FIG. 4 is indicative of a predetermined pattern prescribed in a DVB-H transmission standard. The above-mentioned pilot arrangement is largely classified into a continual pilot (CP) arrangement and a scattered pilot arrangement, such that it is positioned between data subcarriers of an OFDM symbol.

The CP is located at the same subcarrier positiones as the above subcarrier positions in each OFDM symbol. The scattered pilot includes 12 subcarrier intervals, and is repeated at intervals of a predetermined time corresponding to four OFDM symbols.

Therefore, the scattered pilots may have many more phase information units than those of a CP, as can be seen from FIG. 4. A constant interval is provided among the scattered pilots, resulting in less complexity in hardware implementation of the scattered pilots.

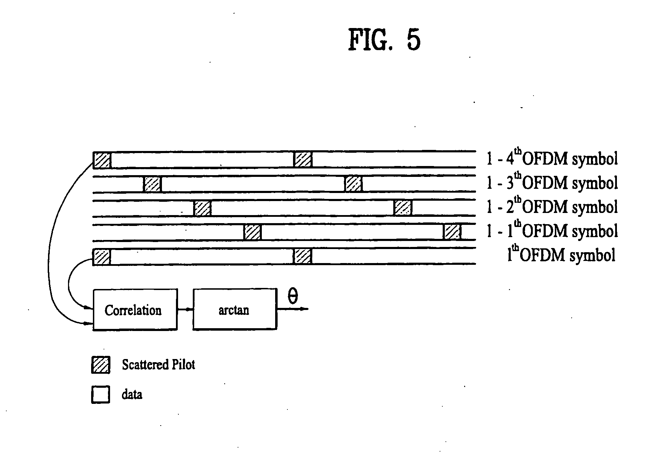

However, the scattered pilots are arranged at different positions between two continual OFDM symbols, differently from the CP. According to the present invention, each scattered pilot is delayed during four OFDM symbol intervals, and is then correlated with a current OFDM symbol, its detailed description will hereinafter be described with reference to FIG. 5.

FIG. 5 is a conceptual diagram illustrating a correlation algorithm using a scattered pilot according to the present invention.

As shown in FIG. 5, the scattered pilot has iterative patterns at intervals of a predetermined time corresponding to four OFDM symbols, such that it correlates a first OFDM symbol with first to fourth OFDM symbols generated when the first OFDM symbol is delayed four times.

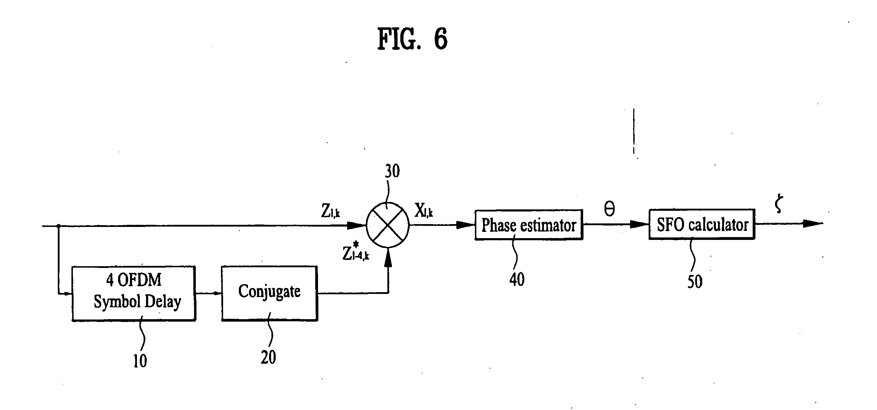

Therefore, correlation between OFDM symbols in which the same scattered pilot pattern occurs is provided, and an arc data value of the correlated data is calculated, such that desired phase information can be acquired. A detailed description will hereinafter be given with reference to FIG. 6.

FIG. 6 is a block diagram illustrating an SFO estimation system using a scattered pilot according to the present invention.

As shown in FIG. 6, the SFO estimation system receives a single signal of $Z_{l,k}$. The $Z_{l,k}$ signal is indicative of a k-th pilot in a first OFDM symbol.

The $Z_{l,k}$ signal is converted into a delayed signal of $Z_{l-4,k}$ delayed for four symbol intervals via a "4 OFDM symbol delay" 10. The $Z_{l-4,k}$ signal is converted into a conjugate root signal of $Z_{l-4,k}^{*}$ via a conjugate calculator 20.

Correlation between the $Z_{l,k}$ signal and the $Z_{l-4,k}^{*}$ signal is performed by a multiplier 30, such that the multiplier 30 outputs a phase information signal of $x_{l,k}$. A phase estimator 40 calculates an arctangent value shown in Equation 1 using the above-mentioned phase information of $x_{l,k}$, such that a total of 142 phase data units are acquired in the 2k mode and a total of 568 phase data units are acquired in the 8k mode.

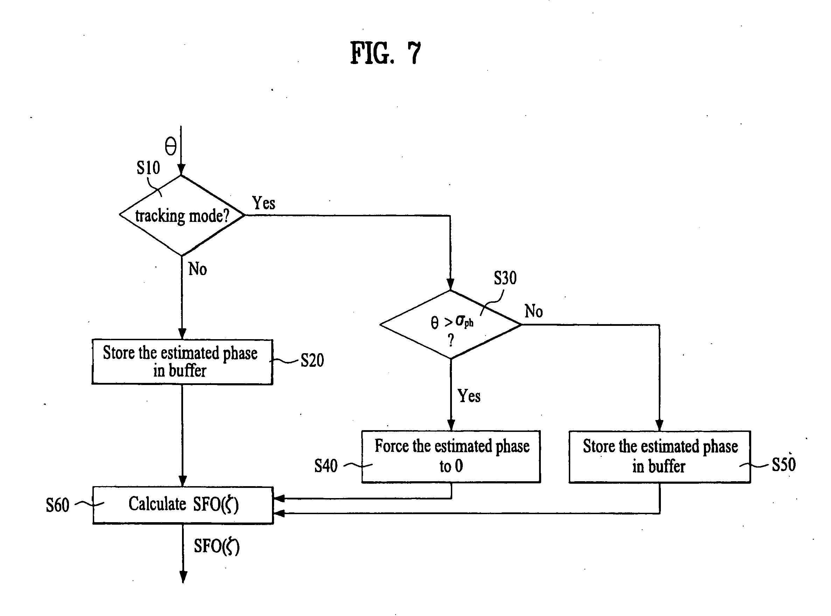

The SFO calculator 50 calculates an SFO value using the phase data acquired from the phase estimator 40, such that it estimates the SFO value. An algorithm for controlling the SFO calculator 50 to estimate the SFO value is shown in FIG. 7. An SFO estimation method will hereinafter be described with reference to FIG. 7.

FIG. 7 is a flow chart illustrating an SFO estimation algorithm according to the present invention.

As shown in FIG. 7, upon receiving a phase θ from the phase estimator 40, the SFO calculator 50 determines whether a current frequency estimation mode is equal to a tracking mode at step S10.

If the current frequency estimation mode is not equal to the tracking mode at step S10, the phase θ acquired from the phase estimator 40 is stored in a buffer contained in the SFO calculator 50 at step S20.

In this case, if the current frequency estimation mode is equal to the tracking mode at step S10, it is determined whether the estimated phase θ is higher than an input standard deviation $\sigma_{ph}$ at step S30. Preferably, the magnitude of the standard deviation is experimentally set to 0.5rad.

If the magnitude of the estimated phase is higher than that of the standard deviation, it is determined that overshoots occur due to a deep fading phenomenon in the tracking mode, such that the estimated phase is compulsorily set to zero. The above-mentioned operation is called a zero-forcing operation.

In more detail, the estimated phase is compulsorily set to zero, such that the resultant estimated phase is stored in the buffer contained in the SFO calculator 50 at sep S40. By the above-mentioned operations, phase overshoots are zero-forced in the tracking mode, such that an SFO can be correctly estimated.

If the magnitude of the estimated phase is equal to or less than that of the standard deviation at step S30, it is determined that no overshoot occurs, such that the estimated phase is stored in the buffer contained in the SFO calculator 50 without any change.

By the above-mentioned operations, the phase estimator 40 correlates a pilot value prior to four symbols with a current pilot value to acquire a desired phase θ, such that the phase θ is collected during a single symbol interval.

The collected phase value is classified into a left-half (LH) phase value and a right half (RH) phase value on the basis of a center subcarrier. The LH phase value and the RH phase value are accumulated to acquire accumulated phase values ($\phi_{RH}$, $\phi_{LH}$).

Thereafter, an SFO value is calculated using a difference ($\phi_{RH}-\phi_{LH}$) between the accumulated phase values at step S60, as denoted by the following equation 2:

$$[\text{Equation 2}]$$

$$\phi_{RH} = \sum_{k \in RH} \theta_k$$

$$\phi_{LH} = \sum_{k \in LH} \theta_k$$

$$SFO(\zeta) = \phi_{RH} - \phi_{LH}$$

If the value of $SFO(\zeta)$ is estimated using the above-mentioned method, the present invention employs many more pilots (i.e., 142 pilots in the 2k mode and 568 pilots in the 8k mode) than those (i.e., 45 pilots in the 2k mode and 177 pilots in the 8k mode) of the conventional CP-associated method, such that it acquires sufficient phase information, resulting in a more correct SFO value. A detailed description will hereinafter be given with reference to annexed drawings.

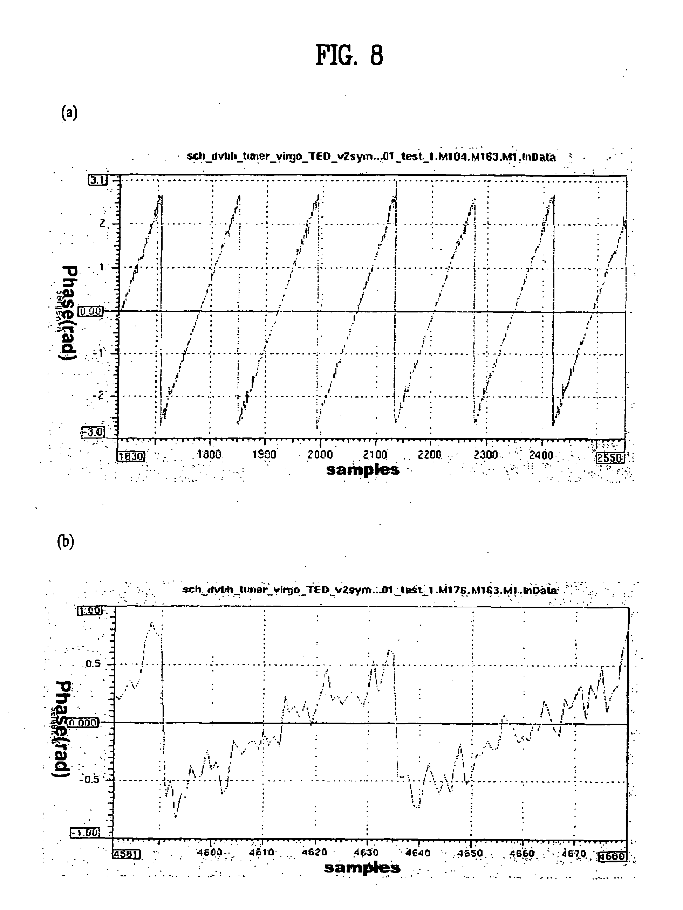

FIG. 8a is a graph illustrating a phase variation in the case of using a scattered pilot according to the present invention. Compared with the graph shown in FIG. 8a, FIG. 8b is a graph illustrating a conventional phase variation in the case of using a CP.

As shown in FIGS. 8a and 8b, a single period of a saw-toothed phase graph shows a phase rotation amount generated during a single symbol interval. It can be recognized that the graph of FIG. 8a in which the scattered pilot is employed has less phase scattering as compared to the other graph of FIG. 8b in which the CP is employed. In other words, a line of the phase graph in FIG. 8a is more smooth than that of the phase graph in FIG. 8b. In this manner, if the degree of phase scattering is reduced, a more correct SFO can be estimated.

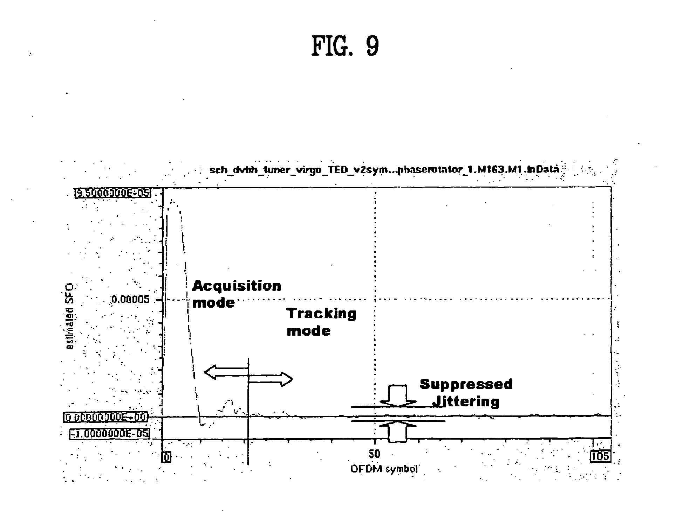

FIG. 9 shows estimated SFO values when phase overshoots are zero-forced in the tracking mode for use in an SFO estimation algorithm using the scattered pilot according to the present invention.

As shown in FIG. 9, if the estimated SFO value varying with time is compared with that of FIG. 3, it can be recognized that the jittering range is reduced in the tracking mode. The jittering range reduction is acquired by zero-forcing phase overshoots in the tracking mode. The jittering range reduction in the tracking mode is indicative of ISI (Inter Symbol Interference) reduction of a reception signal, and no constellation rotation occurs in the tracking mode.

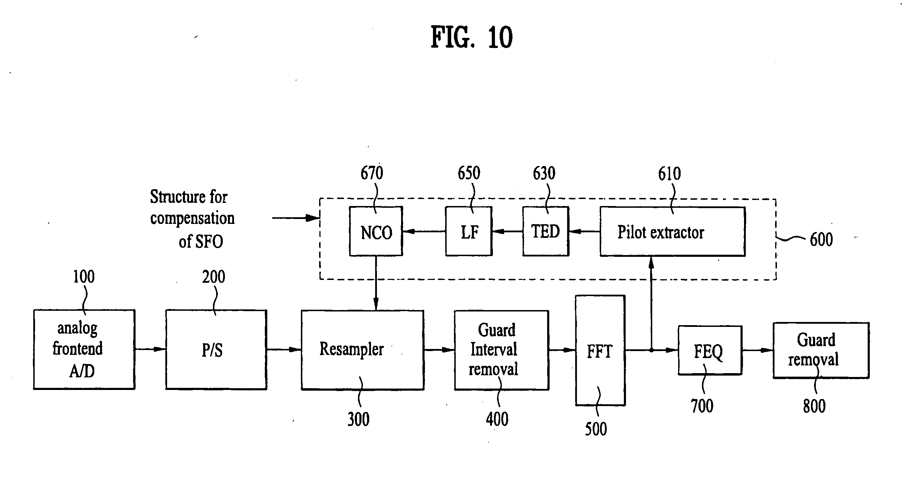

FIG. 10 is a block diagram illustrating an OFDM receiver according to the present invention.

Referring to FIG. 10, the OFDM receiver includes an analog front-end and ADC (Analog-to-Digital Converter) unit 100, a P/S (Parallel-to-Serial) unit 200, a resampler 300, a guard interval removal unit 400, an FFT (Fast Fourier Transform) unit 500, an SFO compensator 600, an FEQ (Freuqency-domain Equalizer) unit 700, and a guard removal unit 800. In more detail, the analog front-end and ADC unit 100 performs a front-end process on a received analog signal, and converts the received analog signal into a digital signal. The P/S unit 200 converts a received parallel signal into a serial signal. The resampler 300 performs a sampling process on a received signal using the sampling frequency generated by the estimated SFO. The guard interval removal unit 400 removes a guard interval of the received signal from a time domain. The FFT unit 500 converts a time-domain signal into a frequency-domain signal. The SFO compensator 600 performs correct sampling synchronization on the frequency-domain signal acting as the output signal of the FFT unit 500. The FEQ 700 performs channel equalization in a frequency domain. The guard remover unit 800 removes a guard interval from the frequency domain.

Particularly, the SFO compensator 600 according to the present invention includes a pilot extractor 610 for extracting a scattered pilot signal from the frequency-domain signal; a timing error detector 630 for receiving the extracted scattered pilot signal, and calculating a timing error value equal to the SFO value ζ using the extraction algorithm of the present invention; a loop filter (L/F) 650 for receiving the SFO value ζ, and accumulatively compensating for the received SFO value ζ; and a numerical controlled oscillator (NCO) 670 for controlling a sampling frequency upon receiving the compensated SFO value ζ from the L/F 650.

Therefore, the resampler 300 performs the sampling process using the resultant SFO value correctly estimated by the above-mentioned inventive method, such that correct sampling synchronization is provided.

The present invention is applicable to a DVB-T receiver and a DVB-H receiver.

As apparent from the above description, a method and apparatus for estimating an SFO in a digital receiver according to the present invention has the following effects.

Firstly, an SFO value is estimated by the scattered pilot, such that it can be more correctly estimated than in the conventional SFO estimation method based on the CP.

Secondly, the jittering range caused by overshoots is reduced by a zero-forcing algorithm, such that an SFO estimation failure caused by serious phase distortion can be solved.

Thirdly, correct sampling frequency compensation can be acquired by the estimated SFO value.

It will be apparent to those skilled in the art that various modifications and variations can be made in the present invention without departing from the scope of the inventions. Thus, it is intended that the present invention covers the modifications and variations of this invention provided they come within the scope of the appended claims.

**Claims**

1. A method for estimating a Sampling Frequency Offset in a digital receiver to perform sampling synchronization, comprising the steps of:

    a) extracting a current scattered pilot having a repetition interval of four symbols contained in a single Orthogonal Frequency Division Multiplexing symbol interval;
    a1) delaying said extracted current scattered pilot by four symbol intervals;
    b) calculating a phase value using both the extracted current scattered pilot and a delayed scattered pilot delayed by four symbol intervals from the current scattered pilot; and
    c) estimating (S60) a Sampling Frequency Offset value using the calculated phase value.

**2.** The method according to claim 1, wherein the step b) for calculating the phase value includes the steps of:

b1) correlating the current scattered pilot with the delay value acquired when the current scatter pilot is delayed by four symbol intervals; and
b2) performing an arctangent operation on the resultant correlation value to acquire a desired phase.

**3.** The method according to claim 1, wherein the step c) for estimating the Sampling Frequency Offset value includes the steps of:

c1) receiving the estimated phase value, and determining the presence or absence of phase overshoots on the basis of the received phase value;
c2) if the phase overshoots occur, compulsorily setting the estimated phase value to zero, and storing the resultant phase value; and
c3) calculating the Sampling Frequency Offset value using the stored phase value.

**4.** The method according to claim 3, wherein the step c1) for determining the presence or absence of the phase overshoots includes the step of:

comparing a magnitude of the estimated phase value with that of a predetermined standard deviation, and determining the presence or absence of the phase overshoots according to the comparison result.

**5.** The method according to claim 4, wherein the predetermined standard deviation is 0.5rad.

**6.** The method according to claim 3, wherein the step c1) for determining the presence or absence of the phase overshoots is performed when a current frequency estimation mode is a tracking mode.

**7.** The method according to claim 6, further comprising the step of:

if the frequency estimation mode is not equal to the tracking mode, storing the estimated phase value in a buffer, and calculating the Sampling Frequency Offset value using the stored phase value.

**8.** The method according to claim 3, further comprising the step of:

if no phase overshoot is determined, storing the estimated phase, and calculating the Sampling Frequency Offset value using the stored phase value.

**9.** The method according to claim 3, wherein the step c3) for calculating the Sampling Frequency Offset value includes the steps of:

c3-1) dividing the stored phase value into a left-half (LH) phase value and a right-half (RH) phase value on the basis of a center subcarrier, and accumulating each of the LH phase value and the RH phase value; and
c3-2) calculating a difference between the accumulated LH and RH phase values, and calculating the Sampling Frequency Offset value.

**10.** The method according to claim 9, wherein the Sampling Frequency Offset calculation is performed in a single symbol interval unit.

**11.** An apparatus for estimating a sampling frequency offset in a digital receiver, comprising:

a delay for receiving a scattered pilot having a repetition interval of four symbols contained in a single Orthogonal Frequency Division Multiplexing symbol interval, and delaying the received scattered pilot by four symbol intervals;
a phase estimator (40) for receiving a current scattered pilot contained in an Orthogonal Frequency Division Multiplexing symbol interval, and estimating a phase value using both the current scattered pilot and a delayed scattered pilot delayed by four symbol intervals from the current scattered pilot; and
a Sampling Frequency Offset calculator (50) for calculating an Sampling Frequency Offset value using the estimated phase value.

**12.** An apparatus according to claim 11, comprising:

a conjugate calculator for calculating a conjugate root value of an output value of the delay;
a multiplier for correlating an output value of the conjugate calculator with the received scattered pilot;
a phase estimator for performing an arctangent operation on an output value of the multiplier to acquire a phase value; and
an Sampling Frequency Offset calculator for receiving an output value of the phase estimator, storing the received output value of the phase estimator during a predetermined interval, and calculating an Sampling Frequency Offset value using the stored phase value.

**13.** The apparatus according to claim 12, wherein the Sampling Frequency Offset calculator determines whether the presence or absence of phase overshoots in a tracking mode of a sampling frequency, and performs a zero-forcing operation when the presence of the phase overshoots is determined.

14. The apparatus according to claim 13, wherein the presence or absence of the phase overshoots is determined by comparing the estimated phase value with a predetermined standard deviation.

15. The apparatus according to claim 14, wherein the predetermined standard deviation is 0.5rad.

16. The apparatus according to claim 12, wherein the Sampling Frequency Offset calculation using the estimated phase value is performed in a single symbol interval unit.

17. The apparatus according to claim 12, wherein the Sampling Frequency Offset calculator divides the stored phase value into a left-half phase value and a right-half phase value on the basis of a center subcarrier, accumulates each of the left-half phase value and the right-half phase value, calculates a difference between the accumulated left-half and right-half phase values, and calculates the Sampling Frequency Offset value.

18. An apparatus according to claim 11, comprising:

a resampler for performing a sampling process on a received signal according to the calculated Sampling Frequency Offset value;
a guard interval removal unit for removing a guard interval of the received signal from a time domain;
a Fast Fourier Transform (FFT) unit for converting a time-domain signal into a frequency-domain signal; and
an Sampling Frequency Offset compensator for calculating the Sampling Frequency Offset value using a scattered pilot contained in an Orthogonal Frequency Division Multiplexing (Orthogonal Frequency Domain Multiplexing) symbol so as to perform correct sampling synchronization on the frequency-domain signal.

19. The apparatus according to claim 18, wherein the Sampling Frequency Offset compensator includes:

a pilot extractor for extracting a scattered pilot signal from the frequency-domain signal;
a timing error detector for receiving the extracted scattered pilot signal, estimating a phase value using both the scattered pilot contained in a single symbol and a delay value acquired when the scattered pilot is delayed by four symbol intervals, and calculating the Sampling Frequency Offset value using the estimated phase value;

a loop filter (L/F) for receiving the Sampling Frequency Offset value, and accumulatively compensating for the received Sampling Frequency Offset value ; and
a numerical controlled oscillator (NCO) for controlling a sampling frequency upon receiving the compensated Sampling Frequency Offset value from the L/F unit.

20. The apparatus according to claim 18, wherein the digital receiver is a Digital Video Broadcasting - Terrestrial system or a Digital Video Broadcasting - Handheld system.

**Patentansprüche**

1. Verfahren zum Schätzen eines Abtastfrequenzversatzes in einem digitalen Empfänger, um die Abtastsynchronisation durchzuführen, das die folgenden Schritte aufweist:

a) Extrahieren eines aktuellen gestreuten Piloten mit einem Wiederholungsintervall von vier Symbolen, der in einem einzelnen orthogonalen Frequenzteilungsmultiplex-Symbolintervall enthalten ist;
a1) Verzögern des extrahierten aktuellen gestreuten Piloten um vier Symbolintervalle;
b) Berechnen eines Phasenwerts unter Verwendung sowohl des extrahierten aktuellen gestreuten Piloten als auch eines verzögerten gestreuten Piloten, der um vier Symbolintervalle gegen den aktuellen gesteuerten Piloten verzögert ist; und
c) Schätzen (S60) eines Abtastfrequenzversatzwerts unter Verwendung des berechneten Phasenwerts.

2. Verfahren nach Anspruch 1, wobei der Schritt b) zum Berechnen des Phasenwerts die folgenden Schritte umfaßt:

b1) Korrelieren des aktuellen gestreuten Piloten mit dem Verzögerungswert, der gewonnen wird, wenn der aktuelle gestreute Pilot um vier Symbolintervalle verzögert ist; und
b2) Durchführen einer Arcustangens-Operation für den sich ergebenden Korrelationswert, um eine gewünschte Phase zu gewinnen.

3. Verfahren nach Anspruch 1, wobei der Schritt c) zum Schätzen des Abtastfrequenzversatzwerts die folgenden Schritte umfaßt:

c1) Empfangen des geschätzten Phasenwerts und Bestimmen des Vorhandenseins oder Nichtvorhandenseins von Phasenüberschreitungen auf der Basis des empfangenen Phasenwerts;

c2) wenn die Phasenüberschreitungen auftreten, zwangsweises Festlegten des geschätzten Phasenwerts auf null und Speichern des sich ergebenden Phasenwerts; und

c3) Berechnen des Abtastfrequenzversatzwerts unter Verwendung des gespeicherten Phasenwerts.

4. Verfahren nach Anspruch 3, wobei der Schritt c1) zum Bestimmen des Vorhandenseins oder Nichtvorhandenseins der Phasenüberschreitungen den folgenden Schritt umfaßt:

Vergleichen der Größe des geschätzten Phasenwerts mit dem einer vorgegebenen Standardabweichung und Bestimmen des Vorhandenseins oder Nichtvorhandenseins der Phasenüberschreitungen gemäß dem Vergleichsergebnis.

5. Verfahren nach Anspruch 4, wobei die vorgegebene Standardabweichung 0,5 rad beträgt.

6. Verfahren nach Anspruch 3, wobei der Schritt c1) zum Bestimmen des Vorhandenseins oder Nichtvorhandenseins der Phasenüberschreitungen durchgeführt wird, wenn ein Schätzbetrieb für die aktuelle Frequenz ein Frequenzverfolgungsbetrieb ist.

7. Verfahren nach Anspruch 6, das ferner den folgenden Schritt aufweist:

wenn der Frequenzschätzbetrieb nicht gleich dem Frequenzverfolgungsbetrieb ist, Speichern des geschätzten Phasenwerts in einen Puffer und Berechnen des Abtastfrequenzversatzwerts unter Verwendung des gespeicherten Phasenwerts.

8. Verfahren nach Anspruch 3, das ferner den folgenden Schritt aufweist:

wenn keine Phasenüberschreitung bestimmt wird, Speichern der geschätzten Phase und Berechnen des Abtastfrequenzversatzwerts unter Verwendung des gespeicherten Phasenwerts.

9. Verfahren nach Anspruch 3, wobei der Schritt c3) zum Berechnen des Abtastfrequenzversatzwerts die folgenden Schritte aufweist:

c3-1) Teilen des gespeicherten Phasenwerts in einen Phasenwert der linken Hälfte (LH) und einen Phasenwert der rechten Hälfte (RH) auf der Basis eines zentralen Teilträgers; und jeweils Akkumulieren des LH-Phasenwerts und des RH-Phasenwerts; und

c3-2) Berechnen einer Differenz zwischen den akkumulierten LH- und RH-Phasenwerten und Berechnen des Abtastfrequenzversatzwerts.

10. Verfahren nach Anspruch 9, wobei die Abtastfrequenzversatzberechnung in einer einzigen Symbolintervalleinheit durchgeführt wird.

11. Vorrichtung zum Schätzen eines Abtastfrequenzversatzes in einem digitalen Empfänger, die aufweist:

eine Verzögerungseinrichtung zum Empfangen eines gestreuten Piloten mit einem Wiederholungsintervall von vier Symbolen, der in einem einzelnen orthogonalen Frequenzteilungsmultiplex-Symbolintervall enthalten ist, und Verzögern des empfangenen gestreuten Piloten um vier Symbolintervalle;

einen Phasenschätzer (40) zum Empfangen eines aktuellen gestreuten Piloten, der in einem orthogonalen Frequenzteilungsmultiplex-Symbolintervall enthalten ist, und Schätzen eines Phasenwerts sowohl unter Verwendung des aktuellen gestreuten Piloten als auch eines verzögerten gestreuten Piloten, der um vier Symbolintervalle gegen den aktuellen gesteuerten Piloten verzögert ist; und

eine Abtastfrequenzversatz-Berechnungseinrichtung (50) zum Berechnen eines Abtastfrequenzversatzwerts unter Verwendung des geschätzten Phasenwerts.

12. Vorrichtung nach Anspruch 11, die aufweist:

eine Konjugiertenberechnungsvorrichtung zum Berechnen eines konjugierten Wurzelwerts eines Ausgangswerts der Verzögerung;

einen Multiplizierer zum Korrelieren eines Ausgangswerts der Konjugiertenberechnungsvorrichtung mit dem empfangenen gestreuten Piloten;

einen Phasenschätzer zum Durchführen einer Arcustangens-Operation für einen Ausgangswert des Multiplizierers, um einen Phasenwert zu gewinnen; und

eine Abtastfrequenzversatz-Berechnungseinrichtung zum Empfangen eines Ausgangswerts des Phasenschätzers, Speichern des empfangenen Ausgangswerts des Phasenschätzers während eines vorgegebenen Intervalls und Berechnen eines Abtastfrequenzversatzwerts unter Verwendung des gespeicherten Werts.

13. Vorrichtung nach Anspruch 12, wobei die Abtastfrequenzversatz-Berechnungseinrichtung das Vorhandensein oder Nichtvorhandensein von Phasenüberschreitungen in einem Verfolgungsbetrieb einer Abtastfrequenz bestimmt und eine Nullerzwingungsoperation durchführt, wenn das Vorhandensein der Phasenüberschreitungen bestimmt wird.

14. Vorrichtung nach Anspruch 13, wobei das Vorhandensein oder Nichtvorhandensein der Phasenüberschreitungen durch Vergleichen des geschätzten Phasenwerts mit einer vorgegebenen Standardabweichung bestimmt wird.

15. Vorrichtung nach Anspruch 14, wobei die vorgegebene Standardabweichung 0,5 rad beträgt.

16. Vorrichtung nach Anspruch 12, wobei die Abtastfrequenzversatzberechnung unter Verwendung des geschätzten Phasenwerts in einer einzigen Symbolintervalleinheit durchgeführt wird.

17. Vorrichtung nach Anspruch 12, wobei die Abtastfrequenzversatz-Berechnungseinrichtung den gespeicherten Phasenwert auf der Basis eines zentralen Teilträgers in einen Phasenwert der linken Hälfte und einen Phasenwert der rechten Hälfte teilt, jeweils den Phasenwert der linken Hälfte und den Phasenwert der rechten Hälfte akkumuliert, eine Differenz zwischen den akkumulierten Phasenwerten der linken Hälfte und der rechten Hälfte berechnet und den Abtastfrequenzversatzwert berechnet.

18. Vorrichtung nach Anspruch 11, die aufweist:

einen Wiederholungsabtaster zum Durchführen eines Abtastverfahrens an einem Empfangssignal gemäß dem berechneten Abtastfrequenzversatzwert;
eine Schutzintervall-Entfernungseinheit zum Entfernen eines Schutzintervalls des Empfangssignals aus einer Zeitdomäne;
eine Schnelle-Fouriertransformationseinheit (FFT-Einheit) zum Umwandeln des Zeitdomänensignals in ein Frequenzdomänensignal; und
einen Abtastfrequenzversatzkompensator zum Berechnen des Abtastfrequenzversatzwerts unter Verwendung eines gestreuten Piloten, der in einem orthogonalen Frequenzteilungsmultiplex- (orthogonalen Frequenzdomänenmultiplex-) Symbol enthalten ist, um die korrekte Abtastsynchronisation für das Frequenzdomänensignal durchzuführen.

19. Vorrichtung nach Anspruch 18, wobei der Abtastfrequenzversatzkompensator umfaßt:

eine Pilotenextraktionsvorrichtung zum Extrahieren eines gesteuerten Pilotsignals aus dem Frequenzdomänensignal;
einen Zeitablauffehlerdetektor zum Empfangen des extrahierten gestreuten Pilotsignals, Schätzen eines Phasenwerts unter Verwendung sowohl des gestreuten Piloten, der in einem einzelnen Symbol enthalten ist, als auch eines Verzögerungswerts, der gewonnen wird, wenn der verzögerte Pilot um vier Symbolintervalle verzögert ist, und zum Berechnen des Abtastfrequenzversatzwerts unter Verwendung des geschätzten Phasenwerts;
ein Schleifenfilter (L/F) zum Empfangen des Abtastfrequenzversatzwerts und akkumulativen Kompensieren des empfangenen Abtastfrequenzversatzwerts; und
einen numerisch gesteuerten Oszillator (NCO) zum Steuern einer Abtastfrequenz nach Empfang des kompensierten Abtastfrequenzversatzwerts von der L/F-Einheit.

20. Vorrichtung nach Anspruch 18, wobei der digitale Empfänger ein digitales terrestrisches Videoausstrahlungssystem oder ein digitales Videoausstrahlungsmobilsystem ist.

## Revendications

1. Procédé pour estimer un décalage de fréquence d'échantillonnage dans un récepteur numérique pour effectuer une synchronisation d'échantillonnage, comprenant les étapes consistant à :

a) extraire un pilote diffusé actuel avec un intervalle de répétition de quatre symboles contenu dans un unique intervalle de symbole de multiplexage orthogonal par répartition en fréquences ;
a1) retarder ledit pilote diffusé actuel extrait de quatre intervalles de symbole ;
b) calculer une valeur de phase en utilisant à la fois ledit pilote diffusé actuel extrait et un pilote diffusé retardé de quatre intervalles de symbole par rapport au pilote diffusé actuel ; et
c) estimer (S60) une valeur de décalage de fréquence d'échantillonnage en utilisant la valeur de phase calculée.

2. Procédé selon la revendication 1, dans lequel l'étape b) pour calculer une valeur de phase comprend les étapes consistant à :

b1) corréler le pilote diffusé actuel avec la valeur de retard acquise quand le pilote diffusé actuel est retardé de quatre intervalles de symbole ; et
b2) appliquer une opération d'arc-tangente sur la valeur de corrélation résultante pour acquérir une phase souhaitée.

3. Procédé selon la revendication 1, dans lequel l'étape c) pour estimer la valeur de décalage de fréquence d'échantillonnage comprend les étapes consistant à :

c1) recevoir la valeur de phase estimée et déterminer la présence ou l'absence de dépassements de phase sur la base de la valeur de phase reçue ;

c2) si les dépassements de phase se produisent, fixer d'office la valeur de phase estimée à zéro et mémoriser la valeur de phase résultante ; et

c3) calculer la valeur de décalage de fréquence d'échantillonnage en utilisant la valeur de phase mémorisée.

4. Procédé selon la revendication 3, dans lequel l'étape c1) pour déterminer la présence ou l'absence des dépassements de phase comprend l'étape consistant à :

comparer une amplitude de la valeur de phase estimée avec celle d'un écart standard prédéterminé et déterminer la présence ou l'absence des dépassements de phase en fonction du résultat de la comparaison.

5. Procédé selon la revendication 4, dans lequel l'écart standard prédéterminé est de 0,5 rad.

6. Procédé selon la revendication 3, dans lequel l'étape c1) pour déterminer la présence ou l'absence des dépassements de phase est effectuée quand un mode d'estimation de fréquence actuel est un mode de poursuite.

7. Procédé selon la revendication 6, comprenant en outre l'étape consistant à :

si le mode d'estimation de fréquence n'est pas égal au mode de poursuite, mémoriser la valeur de phase estimée dans une mémoire tampon et calculer la valeur de décalage de fréquence d'échantillonnage en utilisant la valeur de phase mémorisée.

8. Procédé selon la revendication 3, comprenant en outre l'étape consistant à :

si aucun dépassement de phase n'est déterminé, mémoriser la phase estimée et calculer la valeur de décalage de fréquence d'échantillonnage en utilisant la valeur de phase mémorisée.

9. Procédé selon la revendication 3, dans lequel l'étape c3) pour calculer la valeur de décalage de fréquence d'échantillonnage comprend les étapes consistant à :

c3-1) diviser la valeur de phase mémorisée en une valeur de phase de moitié gauche (LH) et une valeur de phase de moitié droite (RH) sur la base d'une sous-porteuse centrale et accumuler chacune de la valeur de phase de moitié gauche et de la valeur de phase de moitié droite ; et

c3-2) calculer une différence entre les valeurs de phase de moitié gauche et de moitié droite accumulées et calculer la valeur de décalage de fréquence d'échantillonnage.

10. Procédé selon la revendication 9, dans lequel le calcul de décalage de fréquence d'échantillonnage est effectué dans une unique unité d'intervalle de symbole.

11. Dispositif pour estimer un décalage de fréquence d'échantillonnage dans un récepteur numérique, comprenant :

un retardateur pour recevoir un pilote diffusé actuel avec un intervalle de répétition de quatre symboles contenu dans un unique intervalle de symbole de multiplexage orthogonal par répartition en fréquences et retarder le pilote diffusé reçu de quatre intervalles de symbole ;

un estimateur de phase (40) pour recevoir un pilote diffusé actuel contenu dans un intervalle de symbole de multiplexage orthogonal par répartition en fréquences et estimer une valeur de phase en utilisant à la fois le pilote diffusé actuel extrait et un pilote diffusé retardé de quatre intervalles de symbole par rapport au pilote diffusé actuel ; et

un calculateur de décalage de fréquence d'échantillonnage (50) pour calculer une valeur de décalage de fréquence d'échantillonnage en utilisant la valeur de phase estimée.

12. Dispositif selon la revendication 11, comprenant :

un calculateur de valeur conjuguée pour calculer une valeur racine conjuguée d'une valeur de sortie du retard ;

un multiplicateur pour corréler une valeur de sortie du calculateur conjugué avec le pilote diffusé reçu ;

un estimateur de phase pour appliquer une opération d'arc-tangente sur une valeur de sortie du multiplicateur pour acquérir une valeur de phase ; et

un calculateur de décalage de fréquence d'échantillonnage pour recevoir une valeur de sortie de l'estimateur de phase, mémoriser la valeur de sortie reçue de l'estimateur de phase durant un intervalle prédéterminé, et calculer une valeur de décalage de fréquence d'échantillonnage en utilisant la valeur de phase mémorisée.

**13.** Dispositif selon la revendication 12, dans lequel le calculateur de décalage de fréquence d'échantillonnage détermine la présence ou l'absence de dépassements de phase dans un mode de poursuite d'une fréquence d'échantillonnage et effectue une opération de forçage à zéro quand la présence des dépassements de phase est déterminée.

**14.** Dispositif selon la revendication 13, dans lequel la présence ou l'absence de dépassements de phase est déterminée en comparant la valeur de phase estimée avec un écart standard prédéterminé.

**15.** Dispositif selon la revendication 14, dans lequel l'écart standard prédéterminé est de 0,5 rad.

**16.** Dispositif selon la revendication 12, dans lequel le calcul de valeur de décalage de fréquence d'échantillonnage en utilisant la valeur de phase estimée est effectué dans une unique unité d'intervalle de symbole.

**17.** Dispositif selon la revendication 12, dans lequel le calculateur de décalage de fréquence d'échantillonnage divise la valeur de phase mémorisée en une valeur de phase de moitié gauche et une valeur de phase de moitié droite sur la base d'une sous-porteuse centrale, accumule chacune de la valeur de phase de moitié gauche et de la valeur de phase de moitié droite, calcule une différence entre les valeurs de phase de moitié gauche et de moitié droite accumulées et calculer la valeur de décalage de fréquence d'échantillonnage.

**18.** Dispositif selon la revendication 11, comprenant :

un ré-échantillonneur pour effectuer un processus d'échantillonnage sur un signal reçu en fonction de la valeur de décalage de fréquence d'échantillonnage calculée ;

une unité d'élimination d'intervalle de garde pour éliminer un intervalle de garde du signal reçu d'un domaine temporel ;

une unité de transformée de Fourier rapide (FFT) pour convertir un signal de domaine temporel en un signal de domaine fréquentiel ; et

un compensateur de décalage de fréquence d'échantillonnage pour calculer la valeur de décalage de fréquence d'échantillonnage en utilisant un pilote diffusé contenu dans un symbole de multiplexage orthogonal par répartition en fréquences (multiplexage orthogonal de domaine fréquentiel) de manière à effectuer une synchronisation d'échantillonnage correcte sur le signal de domaine fréquentiel.

**19.** Dispositif selon la revendication 18, dans lequel le compensateur de décalage de fréquence d'échantillonnage comprend :

un extracteur de pilote pour extraire un signal pilote diffusé à partir du signal de domaine fréquentiel ;

un détecteur d'erreur de synchronisation pour recevoir le signal pilote diffusé extrait, estimer une valeur de phase en utilisant à la fois le pilote diffusé contenu dans un unique symbole et une valeur de retard acquise quand le pilote diffusé est retardé de quatre intervalles de symbole et calculer la valeur de décalage de fréquence d'échantillonnage en utilisant la valeur de phase estimée ;

un filtre à boucle (L/F) pour recevoir la valeur de décalage de fréquence d'échantillonnage et compenser de manière accumulative la valeur de décalage de fréquence d'échantillonnage reçue ; et

un oscillateur à commande numérique (NCO) pour commander une fréquence d'échantillonnage à la réception de la valeur de décalage de fréquence d'échantillonnage compensée provenant de l'unité de filtre à boucle.

**20.** Dispositif selon la revendication 18, dans lequel le récepteur numérique est un système de diffusion vidéo numérique terrestre ou un système de diffusion vidéo numérique portable.

# FIG. 1
## Prior Art

| Continual pilot carrier positions(index number k) | |
|---|---|
| 2k mode | 8k mode |
| 0 48 54 87 141 156 192 201 255 279 282 333 432 450<br>483 525 531 618 636 714 759 765 780 804 873 888 918<br>939 942 969 984 1050 1101 1107 1110 1137 1140 1146<br>1206 1269 1323 1377 1491 1683 1704 | 0 48 54 87 141 156 192 201 255 279 282 333 432 450<br>483 525 531 618 636 714 759 765 780 804 873 888<br>918 939 942 969 984 1050 1101 1107 1110 1137 1140<br>1146 1206 1269 1323 1377 1491 1683 1704 1752 1758<br>1791 1845 1860 1896 1905 1959 1983 1986 2037 2136<br>2154 2187 2229 2235 2322 2340 2418 2463 2469 2484<br>2508 2577 2592 2622 2643 2646 2673 2688 2754 2805<br>2811 2814 2841 2844 2850 2910 2973 3027 3081 3195<br>3387 3408 3456 3462 3495 3549 3564 3600 3609 3663<br>3687 3680 3741 3840 3858 3851 3933 3939 4026 4044<br>4122 4167 4173 4188 4212 4281 4296 4326 4347 4350<br>4377 4932 4458 4509 4515 4518 4545 4548 4554 4614<br>4677 4737 4785 4899 5091 5112 5160 5166 5199 6253<br>5268 5304 5313 5367 5391 5394 5445 5544 5562 5595<br>5637 5643 5730 5748 5826 5871 5877 5892 5916 5985<br>6000 6030 6051 6054 6081 6096 6162 6213 6219 6222<br>6249 6252 6258 6318 6381 6435 6489 6603 6795 6816 |

EP 1 633 098 B1

# FIG. 2
# Prior Art

$Z_{l,k}$ → (5) → $X_{l,k}$ → Phase estimator (7) → SFO calculator (9) →

Delay (1) → Conjugate (3) → $Z^*_{l-1,k}$

# FIG. 3

## Prior Art

# FIG. 4

# FIG. 5

1 - 4$^{th}$OFDM symbol
1 - 3$^{th}$OFDM symbol
1 - 2$^{th}$OFDM symbol
1 - 1$^{th}$OFDM symbol
1$^{th}$OFDM symbol

Correlation → arctan → θ

▨ Scattered Pilot

☐ data

## FIG. 6

# FIG. 7

S10 — tracking mode?

Yes → S30 — $\theta > \sigma_{ph}$ ?

No (from S10) → S20 — Store the estimated phase in buffer

No (from S30) → S50 — Store the estimated phase in buffer

Yes (from S30) → S40 — Force the estimated phase to 0

S60 — Calculate SFO($\zeta$)

SFO($\zeta$)

EP 1 633 098 B1

# FIG. 8

(a)

(b)

19

# FIG. 9

# FIG. 10

EP 1 633 098 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Frequency synchronization of MIMO OFDM systems with frequency-selective weighting. **PRIOTTI P.** VEHICULAR TECHNOLOGY CONFERENCE. IEEE, 2004, vol. 59

- **HONG CHEN et al.** A Comparison of Frequency Offset Tracking Algorithms for OFDM. *GLOBECOM'03.2003 - IEEE GLOBAL TELECOMMUNICATIONS CONFERENCE. Conference PROCEEDINGS. SAN FRANCISCO,* 01 December 2003, vol. 7